# EUROPÄISCHE PATENTANMELDUNG

(11) **EP 2 608 392 A1**
(43) Veröffentlichungstag der Anmeldung: **26.06.2013**
(21) Anmeldenummer: 11194194.4
(22) Anmeldetag: 19.12.2011
(51) Int. Cl.: H02M 7/49

(54) **Modularer mehrstufiger Wechselrichter mit einer Vielzahl seriell geschalteter Wechselrichtermodule zur Erzeugung mehrphasiger Ausgangsspannungen**

(71) Anmelder: Siemens Aktiengesellschaft, 80333 München (DE)
(72) Erfinder: Hiller, Marc, Dr., 91207 Lauf an der Pegnitz (DE); Köpken, Hans-Georg, Dr., 91056 Erlangen (DE); Schierling, Hubert, Dr., 91052 Erlangen (DE)

(57) **Zusammenfassung**

Die Erfindung betrifft eine Stromrichterschaltung (4), die wenigstens zwei Submodule (22) in Reihenschaltung umfasst, die über eine Induktivität (20) elektrische Leistung aus einer eine Gleichspannung (16) abgebenden Leistungsquelle (8) bezieht. Dabei weist jedes Submodul (22) eingangsseitig eine einphasige Halbbrücke (36) und lastseitig eine einphasige Vollbrücke (46) auf, wobei die Halbbrücke (36) und die Vollbrücke (46) zusammen mit einem Zwischenkreiskondensator (40) gleichspannungsseitig parallel geschaltet sind. In der angegeben Stromrichterschaltung ist wenigstens im ersten Submodul (22) zusätzlich eine Wechselrichterhalbbrücke (52) parallel zur Vollbrücke (46) geschaltet, wobei die Wechselrichterhalbbrücke (52) gemeinsam mit der Vollbrücke (46) eine mehrphasige Wechselrichter-Brückenschaltung (38) bildet, die zur Speisung eines mehrphasigen Wicklungssystems vorgesehen ist.

## Beschreibung

Die Erfindung betrifft eine Stromrichterschaltung gemäß dem Oberbegriff des Anspruchs 1 und einen Elektromotor mit der Stromrichterschaltung.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al, "Modularer Hochfrequenz Umrichter für Fahrzeugantriebe", EMA 2010, 08. bis 09. September 2010, Aschaffenburg bekannt.

Dabei handelt es sich um eine Schaltung, die zum Umwandeln einer Gleichspannung aus einer elektrischen Leistungsquelle in mehrere Wechselspannungen vorgesehen ist. Die einzelnen Wechselspannungen werden durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegebenen werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung durch die Vollbrücke durch einen Hochsetzsteller erhöht. Der Hochsetzsteller umfasst eine Induktivität, die in Reihe zwischen der elektrischen Leistungsquelle und der Reihenschaltung der Vollbrücken verschaltet ist, sowie eine Eingangshalbbrücke in jedem Submodul. Die Vollbrücke und die Halbbrücke sind submodulintern gleichspannungsseitig verschaltet.

Parallel zur Vollbrücke und zur Eingangshalbbrücke in jedem Submodul ist ein Zwischenkreiskondensator verschaltet, der elektrische Energie, beispielsweise aus einem Blindleistungsfluss von den Motorwicklungen, zwischenspeichern kann.

Es ist Aufgabe der Erfindung, die bekannte Stromrichterschaltung zu verbessern.

Die Aufgabe wird durch die Merkmale der unabhängigen Ansprüche gelöst. Bevorzugte Weiterbildungen sind Gegenstand der abhängigen Ansprüche.

Die Erfindung schlägt vor, in wenigstens einem Submodul der eingangs genannten Stromrichterschaltung statt der Vollbrücke einen mehrphasigen Wechselrichter zu verschalten.

Der Vorschlag geht von der Überlegung aus, dass ein mehrphasiger Antriebswechselrichter derart aufgebaut werden könnte, dass er aus einem einzigen aus einer Batterie direkt gespeisten Zwischenkreis mit mehreren parallel geschalteten Halbbrücken eine Wechselspannung erzeugt. In einem derartigen Antriebswechselrichter ändert sich die maximal mögliche Ausgangsspannung mit der Höhe der Zwischenkreisspannung, die je nach Ladezustand der Batterie, Temperatur und Last einbrechen könnte. Dieser Einbruch der Zwischenkreisspannung könnte das Betriebsverhalten beeinträchtigen.

Um den Einbruch der Zwischenkreisspannung zu vermeiden könnte der Zwischenkreis eingangsseitig zur Batterie hin mit einem Hochsetzsteller verschaltet werden, der die Zwischenkreisspannung stabilisiert.

Die Erfindung erkennt jedoch, dass wenn der Antriebswechselrichter an einer deutlich höheren Spannung betrieben werden soll, die Auslegung des Systems sehr ungünstig wird, weil Halbleiterschalter auf die höchste vorgesehene Speisespannung ausgelegt werden müssten. So wäre es notwendig, unterschiedliche Batteriespannungen mit unterschiedlichen Antriebswechselrichtern zu bedienen, da die Sperrspannungsklasse der Halbleiterschalter an die zu speisende Spannung angepasst werden müsste.

Der Erfindung liegt die Überlegung zugrunde, dass sich die ungünstige Auslegung eines Antriebswechselrichters bei unterschiedlichen Speisespannungen durch eine Stromrichterschaltung der eingangs genannten Art lösen lassen würde, wobei die Vollbrücken durch entsprechende Antriebswechselrichter ersetzt werden müssten. Auf diese Weise sind die Antriebswechselrichter auf der Einspeiseseite in Reihe geschaltet, so dass sich durch die Anzahl der in Reihe geschalteten Antriebswechselrichter die gesamte Stromrichterschaltung an die vorgesehene Höhe der Batteriespannung anpassen lässt.

Die Erfindung gibt daher eine Stromrichterschaltung an, die wenigstens zwei Submodule in Reihenschaltung, die über eine Induktivität elektrische Leistung aus einer eine Gleichspannung abgebenden Leistungsquelle bezieht, umfasst. Dabei weist jedes Submodul eingangsseitig eine einphasige Halbbrücke und lastseitig eine einphasige Vollbrücke auf, wobei die Halbbrücke und die Vollbrücke gleichspannungsseitig sowie parallel hierzu ein Zwischenkreiskondensator geschaltet sind. Erfindungsgemäß ist wenigstens im ersten Submodul wenigstens eine Wechselrichterhalbbrücke parallel zur Vollbrücke geschaltet, wobei die Wechselrichterhalbbrücke gemeinsam mit der Vollbrücke eine mehrphasige Wechselrichter-Brückenschaltung bildet, die zur Speisung eines mehrphasigen Wicklungssystems vorgesehen ist.

Durch die Erfindung lässt sich die Speisespannung für einen Antriebswechselrichter anpassen, indem eine Gleichspannung einer Leistungsquelle auf mehrere Antriebswechselrichter aufgeteilt wird. Auf diese Weise brauchen die Antriebswechselrichter nicht mehr auf unterschiedliche Speisespannungen ausgelegt werden zu und können in großen Stückzahlen kostengünstig produziert werden. Die Speisespannungen an den einzelnen Antriebswechselrichtern in der Reihenschaltung kann sehr klein gehalten werden, wodurch sich in den Antriebswechselrichtern als Schalter Halbleiterschalter mit sehr kleiner Sperrspannung einsetzen lassen, die preisgünstig sind und zu wenig Schaltverlusten führen. Durch die Induktivität lässt sich die Halbbrücke am Eingang jedes Submoduls als Hochsetzsteller nutzen, so dass betriebliche Änderungen der Speisespannung jedes Antriebswechselrichters ausgeglichen werden können. Schließlich lässt sich durch eine geeignete Koordination der Schalthandlungen in den einzelnen Halbbrücken der einzelnen Submodule die Qualität der motorseitig wirksamen Ausgangsspannung verbessern und auf der Seite der Eingangsspannung ein kleiner Stromrippel erzielen. Dies ermöglicht die Induktivität der Stromrichterschaltung für die Hochsetzstellerfunktion auf ein Minimum zu reduzieren.

In einer Weiterbildung der Erfindung umfasst die Stromrichterschaltung eine Reihenschaltung aus einem dritten und vierten Submodul, die zum ersten und/oder zweiten Submodul baugleich sind, wobei die Reihenschaltung aus dem dritten und vierten Submodul parallel zur Reihenschaltung aus dem ersten und zweiten Submodul geschaltet ist. Durch die Parallelschaltung lässt sich die elektrische Leistung aus der elektrischen Leistungsquelle nicht nur über die Eingangsspannung an den einzelnen Submodulen skalieren sondern auch über ihren Eingangsstrom.

Die Erfindung gibt auch einen Elektromotor an, der wenigstens ein erstes mehrphasiges Wicklungssystem, ein zweites Wicklungssystem und eine angegebene Stromrichterschaltung umfasst, wobei das erst Wicklungssystem an das erste Submodul und das zweite Wicklungssystem an das zweite Submodul angeschlossen ist.

Die Erfindung gibt auch ein Fahrzeug an, das ein Rad und einen angegebenen Elektromotor zum Antrieb des Rades umfasst.

Die Erfindung gibt auch ein Verfahren zum Betreiben einer Stromrichterschaltung an, wobei die Stromrichterschaltung wenigstens zwei Submodule in Reihenschaltung, die über eine Induktivität elektrische Leistung aus einer eine Gleichspannung abgebenden Leistungsquelle bezieht, umfasst. Dabei weist jedes Submodul eingangsseitig eine einphasige Halbbrücke und lastseitig eine einphasige Vollbrücke auf, wobei die Halbbrücke und die Vollbrücke gleichspannungsseitig sowie parallel hierzu ein Zwischenkreiskondensator geschaltet sind. Das angegebene Verfahren weist die Schritte Erfassen der Gleichspannung und Kurzschließen eines Eingangs des zweiten Submoduls bis die erfasste Gleichspannung eine vorbestimmte Schwellspannung überschreitet auf. Auf diese Weise kann die angegebene Stromrichterschaltung durch die wirksame Anzahl an in Reihe geschalteten Submodulen an unterschiedliche Speisespannungen angepasst werden. Weist die Speisespannung beispielsweise 600V auf, so können beide Submodule in Reihe geschaltet werden. Unterschreitet die Speisespannung beispielsweise 300V, wird eines der Submodule durch eingangsseitiges Kurzschließen aus der Reihenschaltung entfernt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
- FIG 1: eine Schaltung mit einer beispielhaften Stromrichterschaltung gemäß einem ersten Ausführungsbeispiel,
- FIG 2: ein beispielhaftes Submodul der Stromrichterschaltung,
- FIG 3: eine Schaltung mit einer beispielhaften Stromrichterschaltung gemäß einem zweiten Ausführungsbeispiel, und
- FIG 4: eine Schaltung mit einer beispielhaften Stromrichterschaltung gemäß einem dritten Ausführungsbeispiel zeigen.

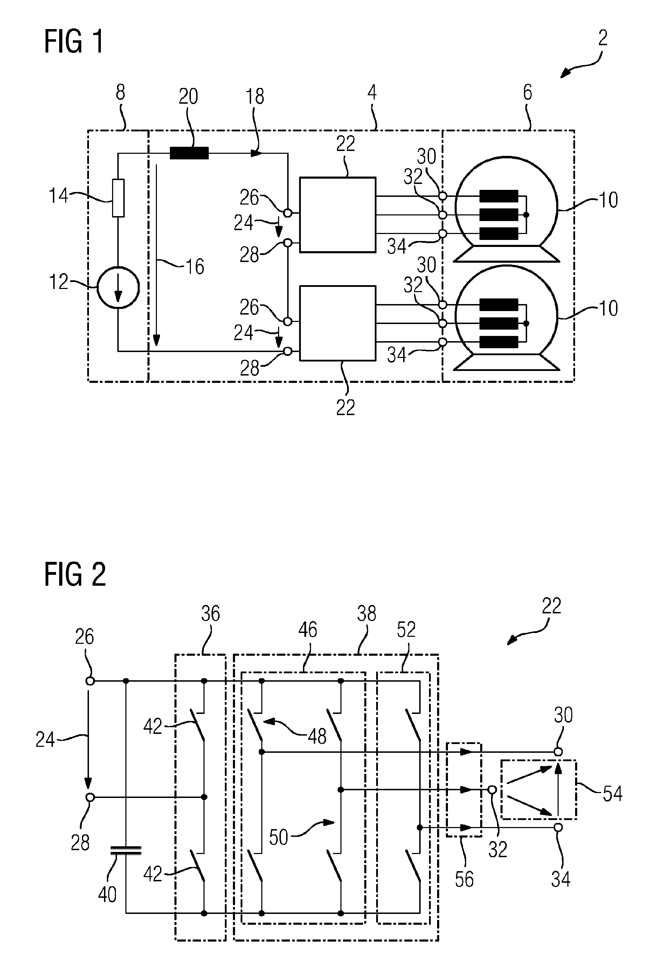

Es wird auf FIG 1 Bezug genommen, die eine Schaltung 2 mit einer beispielhaften Stromrichterschaltung 4 zeigt. Die Stromrichterschaltung 4 speist einen elektrischen Verbraucher 6 mit elektrischer Leistung aus einer elektrischen Leistungsquelle 8.

Der elektrische Verbraucher 6 ist in der vorliegenden Ausführung als Fahrzeug 6 ausgebildet und weist zwei Elektromotoren auf, wobei jeder Elektromotor eine dreiphasige Motorwicklung 10 aufweist, die dreiphasig gespeist wird und jeweils eines der Achsen des Fahrzeuges 6 antreibt, auf denen die Räder gelagert sind.

Die elektrische Leistungsquelle 8 ist in der vorliegenden Ausführung als Fahrzeugbatterie 8, die sich in eine Spannungsquelle 12 mit einem dazu in Reihe angeschlossenen Innenwiderstand 14 zerlegen lässt. Die Batterie 8 legt an die Stromrichterschaltung 4 eine Batteriespannung 16 an und gibt an die Stromrichterschaltung 4 einen Batteriestrom 18 ab.

Die Stromrichterschaltung 4 weist eingangsseitig eine Induktivität 20 auf, die beispielsweise eine Spule oder auch die Induktivität der Leitung zwischen der Batterie 8 und den Submodulen 22 sein kann. An diese Induktivität 20 schließt sich in Reihe eine Reihenschaltung aus zwei noch zu beschreibenden Submodulen 22 an. An den einzelnen Submodulen 22 fällt jeweils eine Teilspannung 24 ab. Ferner ist an jedes Submodul 22 jeweils ein Elektromotor 10 angeschlossen. Basierend auf den Teilspannungen 24 versorgen die Submodule 22 auf diese Weise die Elektromotoren 10 mit elektrischer Energie in einer noch zu beschreibenden Weise. Für die Anzahl der Submodule 22 und dreiphasigen Motorwicklungen 10 wurde in der vorliegenden Ausführung zwei gewählt. Die Stromrichterschaltung 4 kann jedoch eine beliebig hohe Anzahl an Submodulen 22 besitzen und damit eine beliebig hohe Anzahl an elektrischen Lasten speisen, die hier beispielhaft als dreiphasige Motorwicklung 10 ausgeführt sind. Je mehr Submodule 22 jedoch in der Reihenschaltung verschaltet sind, desto kleiner werden die entsprechenden Teilspannungen 24.

Jedes Submodul 22 weist eine erste Eingangsklemme 26, eine zweite Eingangsklemme 28, eine erste Ausgangsklemme 30, eine zweite Ausgangsklemme 32 und eine dritte Ausgangsklemme 34 auf. Während über den ersten und zweiten Eingangsklemmen 26, 28 jeweils die Teilspannungen 24 abfallen, sind an die ersten, zweiten und dritten Ausgangsklemmen 30, 32, 34 die Lasten 10 angeschlossen.

In der gezeigten Stromrichterschaltung 4 können die Teilspannungen 24 durch ein gezieltes Zuschalten von Submodulen 22 eingestellt werden. Ist die Teilspannung 24 an einem der Submodule 22 zu klein, weil beispielsweise die Batteriespannung 16 aufgrund eines zu niedrigen Ladezustandes zu klein ist, so kann das zweite Submodul 22 eingangsseitig 26, 28 kurzgeschlossen werden, so dass nur noch das erste Submodul 22 aktiv ist. Im Fahrzeug 6 würde dies bedeuten, dass eine der beiden Achsen des Fahrzeuges nicht mehr angetrieben wird. Ein Allradantrieb des Fahrzeuges 6 könnte in einem Notprogramm bei einem niedrigen Batteriestand, der beispielsweise aus der Batteriespannung 18 abgeleitet werden kann, beispielsweise in einen Frontantrieb umgewandelt werden, um das Fahrzeug 6 zur nächstliegenden Ladestation zum Laden der Batterie 8 zu bewegen.

Es wird auf FIG 2 Bezug genommen, die beispielhaft den Aufbau eines der Submodule 22 in der Stromrichterschaltung 4 der FIG 1 zeigt. In FIG 2 werden zu FIG 1 gleiche Elemente mit gleichen Bezugszeichen versehen und nicht noch einmal beschrieben.

Das Submodul 22 weist eine Eingangshalbbrücke 36, eine Sechspulsbrückenschaltung 38 und einen Zwischenkreiskondensator 40 auf, die miteinander parallel verschaltet sind.

Die Eingangshalbbrücke 36 weist einen ersten Schalter 42 und einen dazu in Reihe geschalteten zweiten Schalter 44 auf, zwischen denen die zweite Eingangsklemme 28 angeschlossen ist. Die Schalter können als Leistungshalbleiterschalter, wie beispielsweise MOSFETs (Metalloxid-Feldeffekttransistor) ausgebildet sein.

Die erste Teilspannung 24 ist an den ersten Schalter 42 angelegt, während der zweite Schalter 44 in Reihe zwischen dem ersten Schalter 42 und dem dreiphasigen Wechselrichter 38 geschaltet ist. Somit kann der erste Schalter 42 aus Sicht der Sechspulsbrückenschaltung 38 den Eingang 26, 28 aus der Fahrzeugbatterie 8 kurzschließen, während der zweite Schalter 44 (bei geöffnetem ersten Schalter 42) die Sechspulsbrückenschaltung 38 in den Strompfad der Fahrzeugbatterie 8 legen kann. Werden in jedem Submodul 22 die Schalter 42, 44 im Gegentakt abwechselnd geöffnet und geschlossen, ist gemeinsam mit der Induktivität 20 ein Hochsetzsteller geschaffen, der die Summe der Teilspannungen 24 höher setzt, als die Spannung 16 der Fahrzeugbatterie 8. Weiterhin kann durch die Eingangshalbbrücke 36 die Sechspulsbrückenschaltung 38 auch dauerhaft aus der Reihenschaltung der vier Submodule 22 entfernt werden, wenn der erste Schalter 42 dauerhaft geschlossen bleibt. Fällt bei dem Fahrzeug mit der Stromrichterschaltung 4 beispielsweise der das vordere linke Rad antreibende Elektromotor 10 aus, so können durch die Stromrichterschaltung 4 beispielsweise die dreiphasigen Motorwicklungen 10 der Elektromotoren beider Vorderräder aus dem Leistungskreis der Stromrichterschaltung 4 herausgenommen werden, so dass das Fahrzeug in einem Notprogramm beispielsweise nur noch mit einem Heckantrieb weiterfahren kann.

Die Sechspulsbrückenschaltung 38 weist eine Vollbrücke 46 aus einer parallelgeschalteten ersten Wechselrichterhalbbrücke 48 und einer zweiten Wechselrichterhalbbrücke 50 sowie eine parallel dazu geschaltete dritte Wechselrichterhalbbrücke 52 auf. Die Wechselrichterhalbbrücken 48, 50, 52 sind analog zur Eingangshalbbrücke 34 aufgebaut. Abhängig von der Art des Leistungshalbleiterschalters können zusätzlich antiparallel zu den Schaltern den Wechselrichterhalbbrücken nicht weiter dargestellte Freilaufdioden geschaltet sein, die ein Rückspeisen einer elektrischen Leistung von der dreiphasigen Motorwicklung 10 des angeschlossenen Elektromotors in das Submodul 22 erlauben. Derartige Freilaufdioden sind immer dann notwendig, wenn die Halbleiterschalter, wie beispielsweise ein IGBT, nicht rückwärts leitfähig sind. Bei motorischen Betrieb muss der Schalter 44 und bei genmotorischen Betrieb muss der Schalter 42 rückwärts leiten können. Hat man nur motorischen Betrieb, könnte eine Diode am Schalter 42 und der Schalter 44 ganz entfallen.

Auf eine extra Referenzierung wird in FIG 2 der Übersichtlichkeit halber verzichtet. Die Teilspannung 24, die über den Zwischenkreiskondensator 40 stabilisiert wird, kann durch eine geeignete Ansteuerung der Sechspulsbrückenschaltung 38 in eine dreiphasige Wechselspannung 54 umgewandelt werden. Die dreiphasige Wechselspannung 54 wird an die dreiphasige Motorwicklung 10 des entsprechenden Elektromotors 10 angelegt und ruft einen dreiphasigen Wechselstrom 56 durch die dreiphasige Motorwicklung 10 hervor. Gibt die dreiphasige Motorwicklung 10 elektrische Energie an die Sechspulsbrückenschaltung 38 ab, so kann diese den entsprechenden Leistungsfluss beispielsweise mit den bereits erwähnten Freilaufdioden zurück in das Submodul 22 leiten.

Jedes Submodul 22 in der Stromrichterschaltung der FIG 1 speist somit eine dreiphasige Motorwicklung 10 eines Elektromotors. Die Anzahl der Phasen ist in der vorliegenden Ausführung rein exemplarisch. Jedes Submodul 22 kann abhängig von der Anzahl an vorhandenen Wechselrichterhalbbrücken 48, 50, 52 eine beliebig hohe Anzahl an Spannungsphasen ausgeben und damit einen Elektromotor mit einer beliebig hohen Anzahl an Motorwicklungsphasen 10 betreiben. In FIG 1 liegen die von den Submodulen 22 elektrisch versorgten Motorwicklungen 10 in verschiedenen Elektromotoren. Diese geben treiben allerdings das Fahrzeug 6 mit einer gleichen oder ähnlich hohen Last an. Alternativ oder zusätzlich können auch mehrere Elektromotoren mechanisch gekoppelt eine einzige Achse des Fahrzeugs 6 antreiben, wodurch sich ebenfalls der eingangs genannte Vorteil der Gleichspannungsverteilung auf mehrere Submodule 22 erreichen lässt.

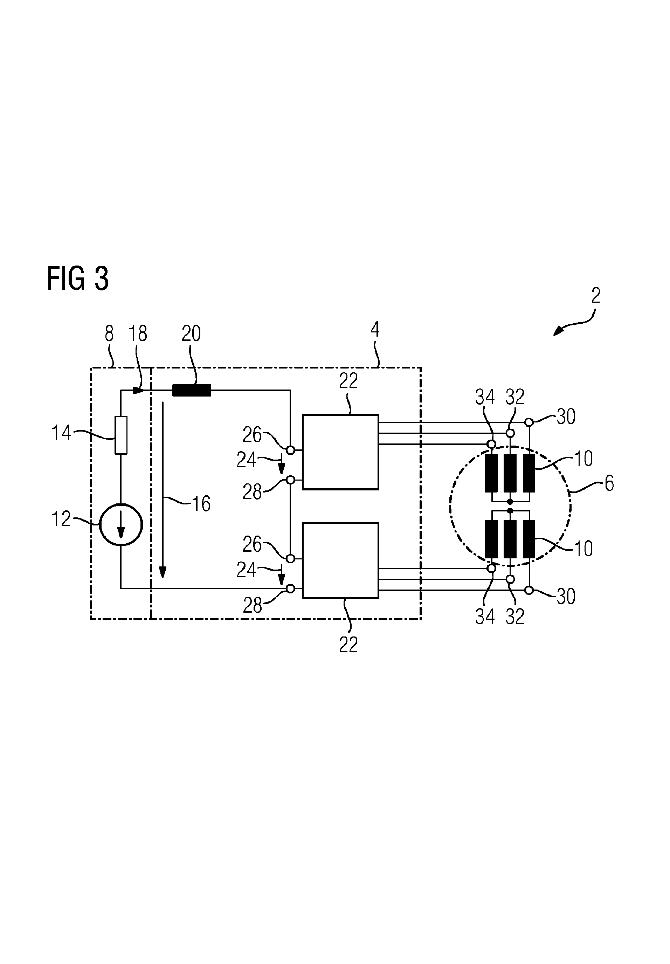

Es wird auf FIG 3 Bezug genommen, die eine Schaltung 2 mit einer beispielhaften Stromrichterschaltung 4 gemäß einem zweiten Ausführungsbeispiel zeigt. In FIG 3 werden zu FIG 1 und 2 gleiche Elemente mit gleichen Bezugszeichen versehen und nicht noch einmal beschrieben.

In FIG 3 ist der elektrische Verbraucher 6 kein Fahrzeug sondern der Elektromotor. Die dreiphasigen Motorwicklungen 10 sind damit in einem einzigen Elektromotor angeordnet. Die beiden dreiphasigen Motorwicklungen 10 können dabei in derselben magnetischen Achse liegen oder auch beispielsweise um 60° versetzt sein.

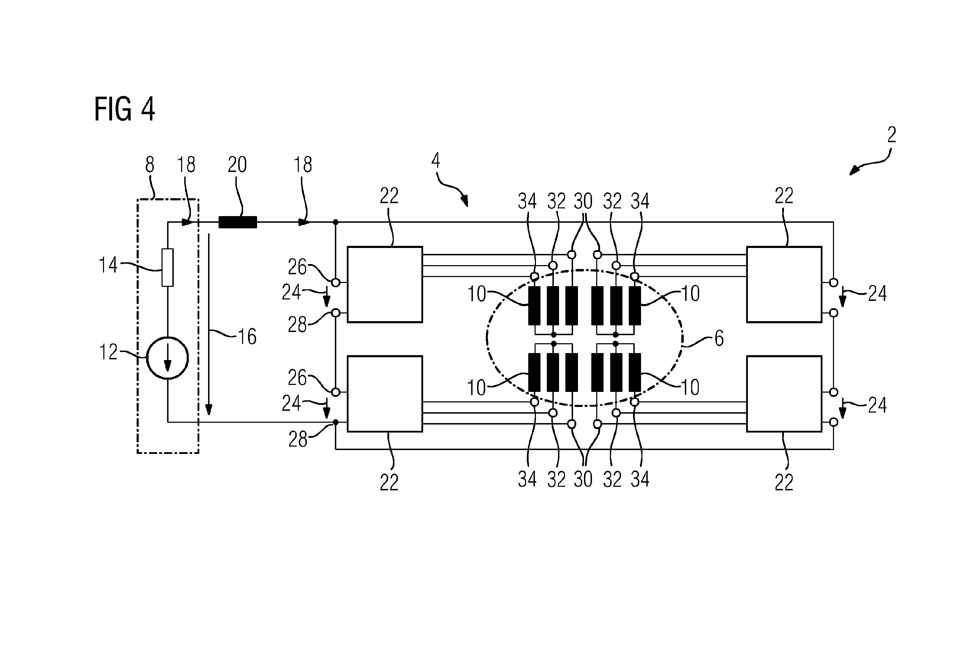

Es wird auf FIG 4 Bezug genommen, die eine Schaltung 2 mit einer beispielhaften Stromrichterschaltung 4 gemäß einem dritten Ausführungsbeispiel zeigt. In FIG 4 werden zu den FIG 1 bis 3 gleiche Elemente mit gleichen Bezugszeichen versehen und nicht noch einmal beschrieben.

In FIG 4 wird zur Erhöhung der Leistung bei unveränderter Speisespannung das Prinzip einer Parallelschaltung eingesetzt. Dazu ist in FIG 4 zu der Reihenschaltung 58 der zwei Submodule 22 aus FIG 1 parallel eine weitere Reihenschaltung 60 aus baugleichen Submodulen 22 geschalten, die jeweils eine dreiphasige Motorwicklung 10 in einem gemeinsamen Elektromotor als Verbraucher 6 antreiben.

Obwohl die Erfindung im Detail durch die bevorzugten Ausführungsbeispiele näher illustriert und beschrieben wurde, ist die Erfindung nicht durch diese Ausführungsbeispiele eingeschränkt. Andere Variationen können vom Fachmann hieraus abgeleitet werden, ohne den Schutzumfang der Erfindung zu verlassen.

## Patentansprüche

1. Stromrichterschaltung (4), umfassend wenigstens zwei Submodule (22) in Reihenschaltung, die über eine Induktivität (20) elektrische Leistung aus einer eine Gleichspannung (16) abgebenden Leistungsquelle (8) bezieht,
- wobei jedes Submodul (22) eingangsseitig eine einphasige Halbbrücke (36) und lastseitig eine einphasige Vollbrücke (46) aufweist, und
- wobei die Halbbrücke (36) und die Vollbrücke (46) gleichspannungsseitig sowie parallel hierzu ein Zwischenkreiskondensator (40) geschaltet sind, **dadurch gekennzeichnet, dass**
- wenigstens im ersten Submodul (22) wenigstens eine Wechselrichterhalbbrücke (52) parallel zur Vollbrücke (46) geschaltet ist, wobei die Wechselrichterhalbbrücke (52) gemeinsam mit der Vollbrücke (46) eine mehrphasige Wechselrichter-Brückenschaltung (38) bildet, die zur Speisung eines mehrphasigen Wicklungssystems vorgesehen ist.

2. Stromrichterschaltung nach Anspruch 1, **gekennzeichnet, durch** eine Reihenschaltung aus einem dritten und vierten Submodul, die zum ersten und/oder zweiten Submodul baugleich sind, wobei die Reihenschaltung aus dem dritten und vierten Submodul parallel zur Reihenschaltung aus dem ersten und zweiten Submodul geschaltet ist.

3. Elektromotor umfassend wenigstens ein erstes mehrphasiges Wicklungssystem, ein zweites Wicklungssystem und eine Stromrichterschaltung nach Anspruch 1 oder 2, wobei das erste Wicklungssystem an das erste Submodul und das zweite Wicklungssystem an das zweite Submodul angeschlossen ist.

4. Fahrzeug umfassend ein Rad und einen Elektromotor nach Anspruch 3 zum Antrieb des Rades.

5. Verfahren zum Betreiben einer Stromrichterschaltung mit wenigstens zwei Submodulen (22) in Reihenschaltung, die über eine Induktivität (20) elektrische Leistung aus einer eine Gleichspannung (16) abgebenden Leistungsquelle (8) bezieht, wobei jedes Submodul (22) eingangsseitig eine einphasige Halbbrücke (36) und lastseitig eine einphasige Vollbrücke (38) aufweist, und wobei die Halbbrücke (36) und die Vollbrücke (38) gleichspannungsseitig sowie parallel hierzu ein Zwischenkreiskondensator (40) geschaltet sind,
**gekennzeichnet durch**
- Erfassen der Gleichspannung, und
- Kurzschließen eines Eingangs (26,28) des zweiten Submoduls bis die erfasste Gleichspannung eine vorbestimmte Schwellspannung überschreitet.

6. Verfahren nach Anspruch 5, **dadurch gekennzeichnet, dass** die Halbbrücke (36) jedes Submoduls (22) ein parallel zu einem Eingang (26,28) jedes Submoduls (22) geschalteten ersten Schalter (42) und einen in Reihe zwischen dem Eingang (26,28) jedes Submoduls (22) und dem Zwischenkreiskondensator (40) jedes Submoduls (22) geschalteten zweiten Schalter (44) aufweist.

7. Verfahren nach Anspruch 6, **gekennzeichnet durch** Schließen des ersten Schalters zum Kurzschließen des Eingangs des zweiten Submoduls.
